# EUROPEAN PATENT APPLICATION

(11) **EP 2 587 604 A1**
(43) Date of publication of application: **01.05.2013**
(21) Application number: 11186444.3
(22) Date of filing: 25.10.2011
(51) Int. Cl.: H02H 3/08, H02H 5/04

(54) **A fault protection device**

(71) Applicant: Tyco Electronics UK Limited, Swindon, Wiltshire SN3 5HH (GB)
(72) Inventor: Bolle, Christopher, Swindon, Wiltshire SN3 3SB (GB); Catchpole, Jonathan, West Hanney, Oxfordshire OX12 OLF (GB)
(74) Representative: Ashton, Gareth Mark

(57) **Abstract**

There is provided a fault protection device (100), comprising a sacrificial conductor (120) such as a fuse, a first resistance (130A) connected in series with the sacrificial conductor, and a switch (140) connected in parallel with the first resistance, the switch configured to close upon the detection of a fault to bypass the first resistance (130A), the bypassing of the first resistance for raising the current through the sacrificial conductor (120) to sacrifice the sacrificial conductor.

## Description

The present invention relates to a fault protection device, and more specifically to a device for breaking an electric circuit under fault conditions.

Various types of fault protection devices are known in the art, which aim to interrupt the flow of current into a device to be protected upon the detection of a fault in the device. The interruption of the current needs to be achieved quickly and safely in response to a fault condition. A simple fuse wire may provide adequate protection in situations where a fault condition is accompanied by a very large increase in current, however when a fault condition is only accompanied by only a small increase in current the fuse may take an unacceptably long time to melt, or not melt at all.

Solutions that are based upon opening switch contacts in response to the detection of a fault condition are liable to arcing between the switch contacts, which can raise the temperature of the switch to un-acceptable levels. Such switches are often limited to use with AC current since they rely on the zero-crossings of the current waveform to help extinguish the arc. A switch suitable for both AC and DC use cannot rely on the presence of zero crossings to help extinguish an arc.

A known fault protection device is described in EP 1,047,092, wherein a heater is activated to melt a fuse upon detection of a fault condition. However, there may still be a significant time delay between activating the heater and the heater melting the fuse.

It is therefore an aim of the invention to improve upon the known art.

According to a first aspect of the invention, there is provided a fault protection device, comprising a sacrificial conductor, a first resistance connected in series with the sacrificial conductor, and a switch connected in parallel with the first resistance, the switch configured to close upon the detection of a fault to bypass the first resistance, the bypassing of the first resistance for raising the current through the sacrificial conductor to sacrifice the sacrificial conductor.

Hence, there is provided a fault protection device that can be switched when a fault is detected, the switching increasing the current through the sacrificial conductor to accelerate the sacrifice of the sacrificial conductor. The sacrificial conductor may for example be a fuse, the sacrifice of the fuse being the blowing of the fuse. Since the switch is configured to close upon detection of a fault, there is no opening of switch contacts that could lead to electrical arcing, and so the fault protection device is suitable for both AC and DC.

The sacrifice typically comprises the destruction of the sacrificial conductor such that substantial current can no longer be conducted through the sacrificial conductor. The sacrifice of the sacrificial conductor typically occurs as a result of excessive current flowing through the sacrificial conductor. For example, if the sacrificial conductor is a fuse wire, then the sacrifice is the melting or vaporization of the fuse wire caused by excessive current flowing through the fuse wire. The sacrifice may be non-reversible.

The sacrificial conductor and first resistance may be connected in series between input and output terminals of the fault protection device. A second resistance may also be connected between the input and output terminals in series with the sacrificial conductor and first resistance. Advantageously, the sacrificial conductor may be connected in series between the first and second resistances. The presence of the second resistance may prevent the current from rising too high when the switch is closed to bypass the first resistance.

The switch may be configured to close under conditions of excess heat, for example excess heat detected by a thermal sensor, such as a PTC element or bi-metallic strip. The switch may for example be controlled by an integrated circuit that receives the signals from the thermal sensor, or the switch itself may comprise a bi-metallic strip that bends under excess heat to close the switch contacts. The switch may comprise multiple contact pairs connected in parallel, any one of which contact pairs may be closed to bypass the resistance in response to the detection of excess heat or another fault condition.

Advantageously, the switch may be configured to close in response to excess heat from the first and/or second resistances. Therefore, the first resistance can provide both the means that is used to detect an overcurrent situation, and the means that is switched out to sacrifice the sacrificial conductor, resulting in an economical use of circuit components.

A compact and convenient form of the sacrificial conductor and first resistance comprises forming the sacrificial conductor and the resistance as a resistor, the resistor comprising a body wherein a first portion of the body includes the first resistance and a second portion of the body includes the sacrificial conductor. An electrode is connected between the first and second portions of the body to the switch. Then the first body portion of the resistor can be bypassed by closing the switch. A third body portion adjoining the second body portion may form the second resistance.

Advantageously, the resistor may be a braking resistor that is configured to dissipate excess electrical energy in a circuit, and the first resistance may be bypassed to sacrifice the sacrificial conductor if the braking resistor reaches too high a temperature.

Embodiments of the invention will now be described with reference to the accompanying drawings, in which:
Fig. 1 shows a circuit diagram of a fault protection device according to an embodiment of the invention;
Fig. 2 shows a schematic diagram of a fault protection device according to another embodiment of the invention; and
Fig. 3 shows a circuit diagram of an electrical circuit incorporating the fault protection device of Fig. 1.

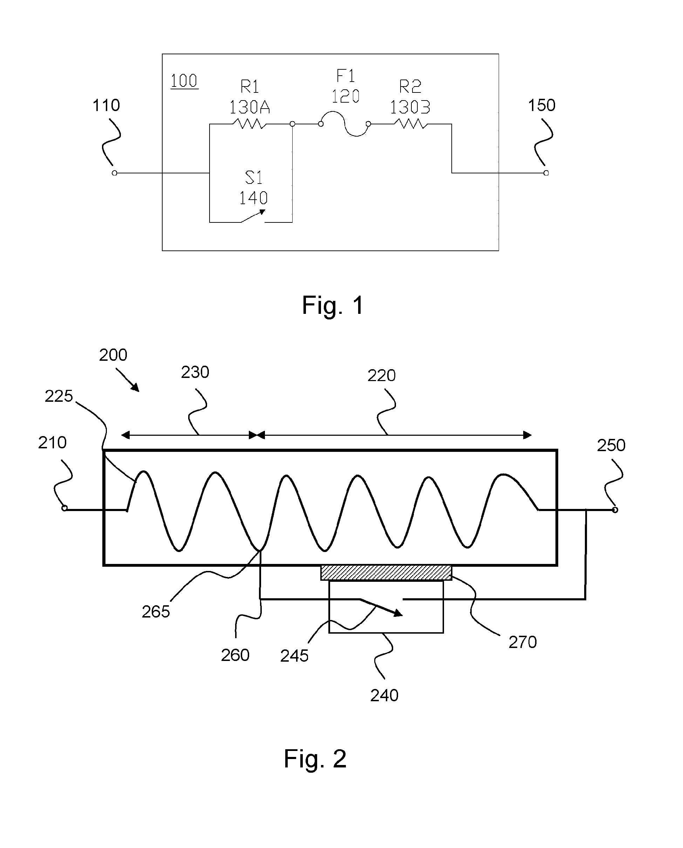

The circuit diagram of Fig.1 shows a fault protection device 100 comprising an input 110 that is connected to a parallel circuit of a first resistance 130A and a switch 140. The parallel circuit is connected in series with a sacrificial conductor 120 in the form of a fuse 120, and a second resistance 130B. The second resistance 130B is also connected to an output 150.

The switch 140 is configured to close when a fault is detected, and may close itself upon detection of a fault, or may close in response to a fault signal from another part of the circuit (not shown).

For example, in use the input 110 and output 150 are connected between two terminals that are to be connected until a fault condition is detected, whereupon the two terminals should be disconnected from one another. The terminals are connected by the series combination of the first resistance 130A, fuse 120, and second resistance 130B, until the fault condition is detected. When the fault condition is detected, the switch 140 is closed, causing a reduction in the resistance between the input 110 and the output 150, and a corresponding increase in current that acts to blow the fuse 120 and to disconnect the two terminals from one another. The second resistor 130B serves to maintain some level of resistance between the terminals 110 and 150 to help prevent the current from reaching dangerous levels. Whether the second resistor 130B is actually required will depend upon the actual application.

The schematic diagram of Fig. 2 shows a fault protection device according to another embodiment of the invention, in which the fault protection device is implemented as a resistor 200. For illustrative purposes the resistor is shown as comprising a coiled resistive wire 225, although other types of resistor are also possible.

The resistor comprises a first body portion 220 and a second body portion 230, the first body portion 220 forming a first resistance and the second body portion 230 forming a sacrificial conductor. An electrode 260 is connected to the resistor 200 at a point 265 between the first and second body portions 220 and 230.

A switch 240 is mounted to the first portion 220 of the resistor by a thermal compound 270. The switch comprises a bi-metallic strip 245 that can flex according to temperature to open or close the switch 240. One terminal of the switch is connected to the electrode 260, and the other terminal of the switch is connected to the output terminal 250. Thus, the switch 240 is connected in parallel with the first portion 220 of the resistor, and is closable to bypass the first portion 220. The bi-metallic strip forms one of the contacts of the switch and constitutes an electrode that conductively connects to the other switch contact, although in an alternative embodiment the bi-metallic strip may be separate from the switch contacts and may flex to mechanically force the switch contacts together.

The resistor 200 forms a fault protection device connected between an input terminal 210 and an output terminal 250, wherein the fault protection device becomes open-circuit upon the detection of a fault. In normal use, the current flowing through the resistor is at a normal level, and the switch 240 is open. However, if the current flowing through the resistor 200 is raised to an abnormally high level under a fault condition, then the temperature of the first body portion is raised, causing the bi-metallic strip 245 to flex and close the switch 240. Once the switch has closed, the overall resistance of the resistor reduces since the first resistance 220 is bypassed by the switch, and the current increases accordingly. The increased current heats the second resistance 230 even further and burns it out, thereby disconnecting the input 210 and output 250 terminals from one another.

The resistance of the first portion 220 is higher than the resistance of the second portion 230 to provide a relatively large change in resistance when the first portion 220 is bypassed by the switch 240. The second portion 230 is of a similar construction to the first portion 220, the length of the first portion 220 being longer than the length of the second portion 230 to provide a higher resistance of the first portion 220 compared to the second portion 230.

In a further embodiment, a part of the resistor between the input 210 and the point 265 may be made more susceptible to burning out. Then, that part is considered to be the second portion, and the remainder of the resistor between the input 210 and the point 265 may be considered as a third portion. The third portion can act as a second resistance for restricting the flow of current when the switch 240 is closed, to prevent the current from being raised too high. In some embodiments, the second portion may be intermediate of the third portion and the first portion, and such embodiments may have a circuit diagram according to Fig.1. The second portion may be made more susceptible to burning out by for example forming it as a fuse wire.

The switch 240 could alternately be mounted on another part of a system to be protected, and may comprise a bi-metallic strip for closing in response to heat, or may be controlled by a control signal from another circuit, for example from a thermal sensor, or from an integrated circuit configured to detect circuit faults.

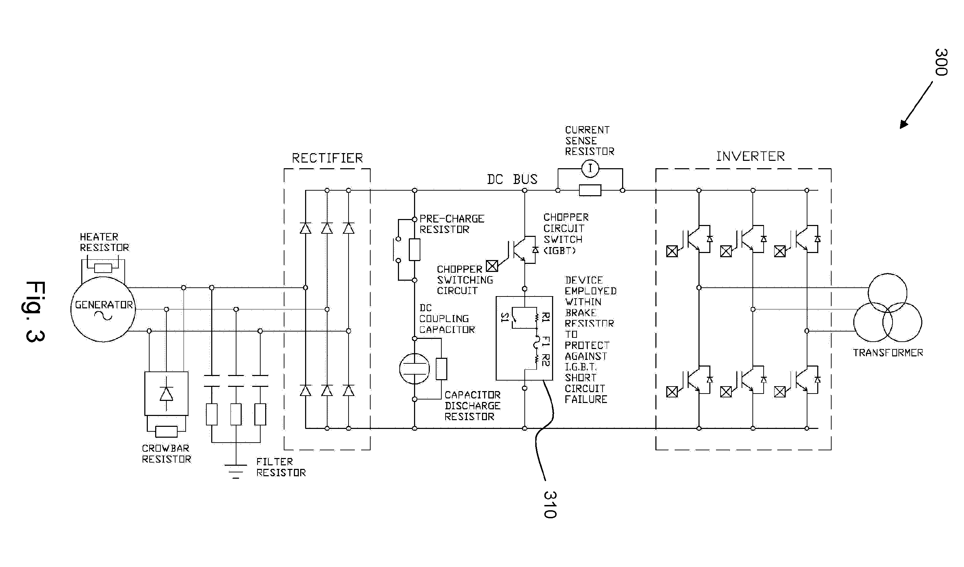

Fig. 3 shows a diagram of an electrical circuit 300 incorporating a fault protection device 310 similar to the fault protection device 100 of Fig. 1. The electrical circuit 300 is a power conversion circuit comprising a rectifier and an inverter. A chopper switch and a brake resistor in the form of the fault protection device 310 are used for controlling the amount of power that is passed into the inverter. The break resistor 310 may be formed in a similar manner to that shown in Fig. 2.

In use, excess power is dissipated in the brake resistor 310 each time the chopper switch is connected. If the chopper switch fails by no longer presenting a sufficiently high resistance when opened, then the amount of power dissipated in the brake resistor will begin to increase beyond the maximum design limits, and the temperature of the brake resistor 310 will begin to rise. The rise in temperature is detected and the switch S1 is closed to bypass the resistance R1, thereby raising the current for a short time until the fuse wire F1 blows. The blowing of the fuse wire makes the brake resistor open-circuit and no further power is dissipated within it. Since the larger current that blows the fuse wire F1 only flows for a short time, the heat energy that is generated by the larger current may be insignificant compared to the heat energy that is generated by a lower-level current flowing for a much longer duration of time.

Further embodiments falling within the scope of the appended claims will also be apparent to those skilled in the art.

## Claims

1. A fault protection device (100), comprising a sacrificial conductor (120), a first resistance (130A) connected in series with the sacrificial conductor, and a switch (140) connected in parallel with the first resistance, the switch (140) configured to close upon the detection of a fault to bypass the first resistance (130A), the bypassing of the first resistance (130A) for raising the current through the sacrificial conductor (120) to sacrifice the sacrificial conductor.

2. The fault protection device of claim 1, further comprising a second resistance (130B) connected in series with the first resistance (130A) and sacrificial conductor (120).

3. The fault protection device of claim 2, wherein the sacrificial conductor (120) is connected in series between the first (130A) and second (130B) resistances.

4. The fault protection device of any one of claims 1 to 3, wherein the sacrificial conductor (120) and first resistance (130A) are connected in series between input (110) and output (150) terminals of the fault protection device.

5. The fault protection device of any preceding claim, wherein the switch (120) is configured to close under conditions of excess heat.

6. The fault protection device of claim 5, wherein the switch (240) comprises a bi-metallic strip (245), the bi-metallic strip (245) arranged to close the switch (240) upon excess heating.

7. The fault protection device of claim 6, wherein the bi-metallic strip (245) forms one of the contacts of the switch (240).

8. The fault protection device of any one of claims 5 to 7, further comprising a thermal sensor for closing the switch (140) upon detection of excess heat.

9. The fault protection device (100) of any one of claims 5 to 8, wherein the switch (240) is configured to close in response to excess heat from the first resistance (220).

10. The fault protection device of any preceding claim, wherein the sacrificial conductor (120) and the first resistance (130A) are comprised in a resistor (200), the resistor comprising a body wherein a first portion (220) of the body forms the first resistance, wherein a second portion (230) of the body adjoining the first portion of the body forms the sacrificial conductor, and wherein an electrode (260) connected between the first and second portions of the body is connected to the switch (240).

11. The fault protection device of claim 10 when dependent on at least claim 2, wherein a third portion of the body adjoins the second portion (230) of the body, the third portion of the body forming the second resistance (130B).

12. The fault protection device of claim 10 or 11, wherein the switch (240) is mounted to the body of the resistor (200).

13. The fault protection device of any one of claims 10 to 12, wherein the resistor (200) is a braking resistor configured to dissipate excess electrical energy.

14. The fault protection device of any preceding claim, wherein the fault protection device (100) is a direct current (DC) fault protection device.

15. An electrical circuit (300) comprising the fault protection device (100) of any preceding claim.
